# EUROPÄISCHE PATENTANMELDUNG

(11) **EP 0 990 406 A2**
(43) Veröffentlichungstag der Anmeldung: **05.04.2000**
(21) Anmeldenummer: 99117307.1
(22) Anmeldetag: 03.09.1999
(51) Int. Cl.: A47J 41/02, B65D 81/38, F25D 23/06

(54) **Isoliergehäuse**

(30) Priorität: 05.09.1998 DE 29816013 U; 05.09.1998 DE 19840640
(71) Anmelder: Isovac Ingenieurgesellschaft mbH, 74899 Sinsheim (DE)
(72) Erfinder: Die Erfindernennung liegt noch nicht vor
(74) Vertreter: Kammer, Arno, Dipl.-Ing.

(57) **Zusammenfassung**

Es wird ein Isoliergehäuse beschrieben, das aus einem doppelwandigen, vakuumdichten Gehäuse (1,3;11,12) besteht, das eine den Zwischenraum ausfüllende, gestützte Vakuumisolierung (2;13) aufweist.

Der Stützkörper der Vakuumisolierung besteht aus einer rieselfähigen Siliziumoxidverbindung.

## Beschreibung

Die Erfindung betrifft ein Isoliergehäuse mit den Merkmalen des Oberbegriffs des Anspruchs 1.

Großflächige Isoliergehäuse für Hausgeräte, z.B. Kühlschränke, Gefriertruhen und Warmwasserspeicher sind in der Regel als doppelwandige Gehäuse mit einer zwischenliegenden Kunststoff-Schaum-Isolierung ausgeführt. Aufgrund der zunehmenden Anforderungen zur Verringerung des Energieverbrauches dieser Geräte werden effizientere Wärmedämmkonzepte gefordert. Die zukünftigen Anforderungen zur Wirksamkeit von Wärmedämmungen können bei vertretbarer Isolierdicke nur mit evakuierten Dämmungen erreicht werden.

Es sind Lösungsvorschläge bekannt, bei denen, z. B. die bekannten Kühlgeräte-Gehäuse mit vorgefertigten, in sich vakuumisolierten Platten - sogenannten Vakuum-Isolationspaneels (VIP's) - bestückt werden und die noch verbleibenden Zwischenräume ausgeschäumt werden.
Dieses Verfahren ist gekennzeichnet durch eine Vielzahl von unterschiedlichen Komponenten, Materialien und Baugruppen sowie dadurch auch hohe Fertigungskosten. Durch die hohe Zahl von Fugen (in den Bereichen, wo VIP's aneinander stoßen) sind zudem Bereiche signifikant höherer Wärmeleitung und damit erhöhter Energieverluste gegeben.

Insbesondere um die erhöhten Randzonen- und Fugenverluste zu minimieren, sind ebenfalls Lösungsvorschläge bekannt, bei denen das gesamte, doppelwandige Gehäuse mit einem Stützkörper (sogenannte Faserboards) gefüllt und evakuiert wurde. Die Behälterwände sind aus Gründen der Vakuumdichtigkeit und Stabilität aus Metall - insbesondere Edelstahl - gefertigt. Dadurch wird die Gehäusefertigung aufwendig und unwirtschaftlich. Zudem sind im Bereich großer Durchbrüche (z. B. der Türöffnung) durch die metallischen Wärmebrücken extrem hohe Wärmeströme zu verzeichnen.

Es sind auch Isoliergefäße mit doppelwandigem, evakuiertem Glaseinsatz für Speisen und Getränke seit langem bekannt und im Einsatz. Die wärmedämmende Wirkung derartiger Behälter wird durch ein hohes Vakuum (p<10⁻⁴ mbar) erreicht und ist ausreichend, um Speisen und Getränke über viele Stunden warm (oder) kalt zu halten. Dieser Aufbau weist jedoch mehrere gravierende Nachteile auf. Glasgefäße dieser Bauart sind äußerst bruchempfindlich; hinsichtlich Formgebung und Größe der Behälter sind Einschränkungen gegeben; für die Verwendung im Haushalt oder in der Gastronomie müssen die Behälter aus den vorgenannten Gründen mit einer Hülle versehen werden, wodurch der gesamte Aufbau sehr aufwendig und teuer wird. Zur Umgehung der Bruchempfindlichkeit sind ebenfalls seit langem Isoliergefäße bekannt, bei denen der doppelwandige, evakuierte Behälter vollständig aus Metall gefertigt ist. Auch diese Gefäße müssen in hohes Vakuum im Isolierraum aufweisen, wodurch die Fertigung aufwendig und teuer ist. Auch hinsichtlich der Formgebung und Größe sind derartige Behälter Beschränkungen unterworfen.

In der DE 35 45 518 A1 ist eine sogenannte 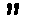 gestützte Vakuumisolierung" für Isoliergefäße beschrieben, die sich durch ähnlich hohe Wirksamkeit, wie bei den oben beschriebenen Glasdewars, auszeichnet, zur Aufrechterhaltung der Isolierwirkung nur ein vergleichsweise grobes Vakuum (p<10⁻¹ mbar) benötigt, hohe mechanische Festigkeiten, ähnlich den vorgenannte Metalldewars aufweist und aufgrund der selbsttragenden Konstruktion viele Freiheitsgrade bezüglich Formgebung und Größe eröffnet.
Durch die Verwendung vorgeformter Isolierkörper aus Fasermaterial erfordert dieser Aufbau jedoch einen relativ hohen Fertigungs- und Montageaufwand und ist daher für zahlreiche Anwendungen zu kostenintensiv.
In vielen Fällen, vor allem beim Gebrauch als Isoliergefäß für Getränke wie Kaffee oder Tee, hat sich gezeigt, daß die im Vergleich zum Glas relativ rauhe Oberfläche des inneren Metallbehälters stark verschmutzen kann und nur schwer zu reinigen ist.

Als leichte und kostengünstige Lösung sind ebenfalls seit langem Isoliergefäße mit einer Wärmedämmung aus Kunststoffschaum bekannt. Derartige Isolierungen genügen jedoch in den meisten Fällen nicht den gestellten Anforderungen hinsichtlich Warm- (oder Kalt-) Haltung der eingefüllten Speisen und Getränke.

Gemäß der Patentanmeldung EP 0 718 212 werdend derartige Isolierbehälter zur Verbesserung der Temperaturkonstanz über längere Zeiträume mit einem (Latent-) Wärmespeicher versehen. Aufgrund der schlechten Isolierwirkung der verwendeten Behälter muß der Speicher groß dimensioniert werden. Dadurch wird der Aufbau jedoch extrem voluminös und schwer, so daß sich derartige Lösungen für den täglichen Gebrauch nicht anbieten.

In der Patentanmeldung EP 0 733 330 wird eine Lösung vorgeschlagen, bei der die Isolierwirkung durch eine zweite zwischen zwei Wandungen eingeschlossene Gasfüllung mit niedriger Wärmeleitung erreicht werden soll. Aus physikalischen Gründen ist die Wärmeleitung solcher Gasfüllungen jedoch immer noch so hoch, daß die Anforderungen bezüglich des Warm- (oder Kalt-) Haltens von Speisen und Getränken üblicherweise nicht erfüllt werden können. Auch aus hygienischer Sicht genügen derartige Voll-Kunststoffbehälter häufig nicht den gestellten Anforderungen.

Der Erfindung liegt die Aufgabe zugrunde, ein Isoliergefäß der genannten Art zu schaffen, welches sich durch gute bis sehr gute Isolierwirkung, ein geringes Gewicht, hohe mechanische Stabilität und einen einfachen Aufbau und damit günstige Fertigungskosten auszeichnet.

Die Aufgabe wird erfindungsgemäß durch die Merkmale des Anspruchs 1 gelöst. Die Isolierung ist somit als integrale, selbsttragende Vakuumisolierung ausgeführt und der doppelwandige Isolierbehälter kann gleichzeitig die äußere Sichthülle bilden. Die Behälterwandungen können sowohl aus Metall oder Kunststoff, als auch in beliebiger Kombination der genannten Materialien hergestellt sein.

Gemäß einer Weiterbildung der Erfindung entspricht das Gehäuse den hygienischen Anforderungen im Gastronomie- und Haushaltsbereich dadurch, daß es auf der Nutzseite mit einer harten, glasartigen Beschichtung, bzw. einem Überzug, einer Sol-Gel-Beschichtung versehen ist und somit das Gefäß leicht und sicher zu reinigen ist.

Der Isolierraum ist mit einem rieselfähigen, einfach zu verdichtenden Schaumglasgranulat ausreichender Druckfestigkeit gefüllt und auf einen Restgasdruck p < 10¹ mbar evakuiert.
Versuche haben gezeigt, daß optimale Isolierbedingungen mit einem offenzelligen Schaumglasgranulat mit 2 bis 5 mm Granulatdurchmesser und einem Schüttgewicht von kleiner 0,2g/cm³ erreicht werden.

Zur Verbesserung der Vakuumdichtigkeit - vor allem bei Verwendung von Kunststoff-Wandteilen - werden die Flächen des Gehäuses vor dem Zusammenbau mittels einer als Diffusionsbarriere dienenden Schicht abgedichtet. Diese Schicht ist vorzugsweise auf der dem Vakuum zugewandten Seite angeordnet. Als ausreichend gas- und wasserdampfdichte Beschichtung kommen vorzugsweise Mehrschichtsysteme in Frage, bei denen z.B. zunächst mit einem Metalloxid bedampft und anschließend mit einer glasartigen Lackschicht nachversiegelt wird. Aus fertigungstechnischen Gründen kann es vorteilhaft sein, die Behälterwände nicht zu beschichten, sondern mit einer als Diffusionsbarriere geeigneten MehrschichtVerpackungsfolie vollflächig zu kaschieren.

Zur Aufrechterhaltung des Vakuums über hinreichend lange Zeiträume wird ein Gettermaterial im Isolierraum appliziert. Dies kann sowohl in Form eines genau plazierten Getterformkörpers geschehen, als auch durch Beimischen zum Granulat oder Pulver.

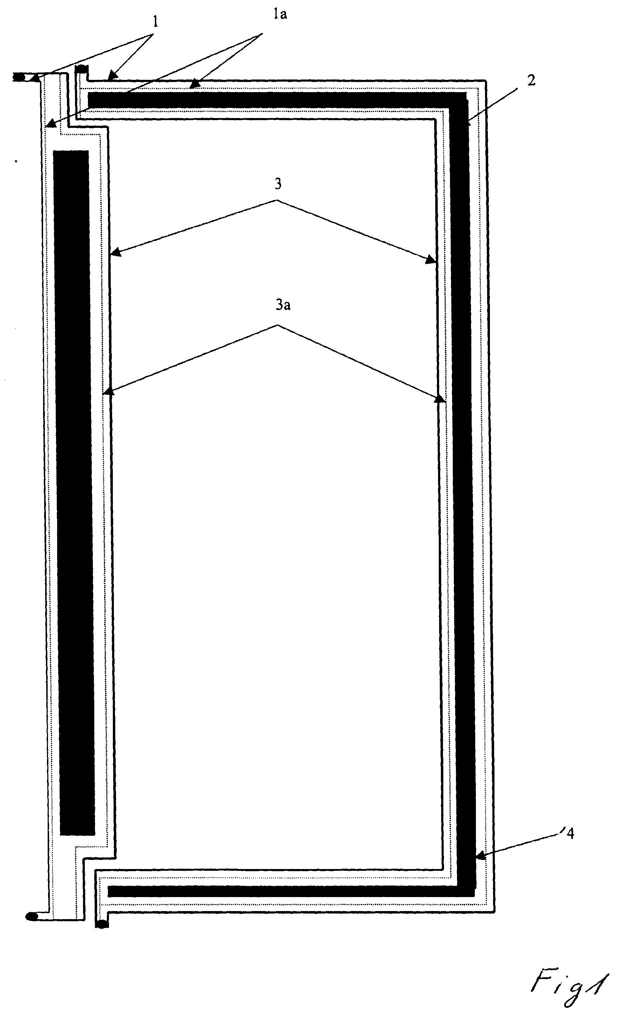

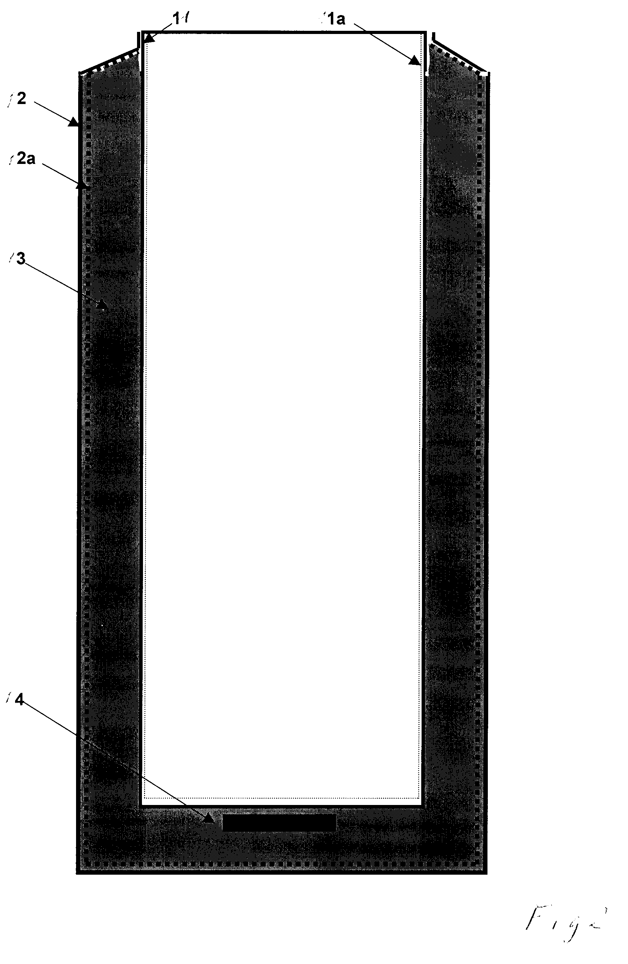

Anhand der Zeichnung wird ein Ausführungsbeispiel der Erfindung erläutert. Sie zeigt in Fig.1 als Beispiel ein Isoliergehäuse für Kühlgerate geschnitten dargestellt, wobei links eine Tür dargestellt ist und in Fig. 2 ein Isoliergefäß.

In Fig.1 ist eine Außenwand des Behälters aus Kunststoff mit 1, eine Schicht auf deren Innenseite mit 1a bezeichnet. Eine Innenwand trägt das Bezugszeichen 3. Sie ist auf der dem Isolierraum zugewandten Seite mit einer Schicht 3a versehen. Die als Diffusionsbarrieren dienenden Abdichtungen 1a und 3a können aus einer Beschichtung (z. B. Metalloxid) und einer zusätzlichen Versiegelung (Lack) oder auch aus einer z.B. aufgeklebten, diffusionsdichten Folie bestehen. Diese Folie kann auch Teil einer Mehrschichtfolie sein. Nicht gezeigt ist eine Schicht (z. B. Sol-Gel) auf der Innenseite des Innenbehälters um die Reinigung zu erleichtern.

Zwischen Außen- und Innenbehälter ist eine Isolierstützschüttung 2 aus Schaumglasgranulat eingebracht. Die durch Außen- und Innenwand gebildeten Räume stehen unter Unterdruck. Um diesen Unterdruck möglichst lange aufrecht zu erhalten ist ein Getter 4 eingelegt.

In Fig. 2 ist mit 11 ein Innenbehälter, mit 11a dessen Beschichtung und mit 12 ein Außenbehälter eines Isoliergefäßes bezeichnet. Der Außenbehälter ist aus Kunststoff und auf der Vakuumseite mit einer wasserdampfdichten Beschichtung 12 a versehen. Mit 13 ist ein zwischen Außen- und Innenbehälter angeordneter Stützkörper aus Schaumglasgranulat bezeichnet. Im Raum des Stützkörpers 13 herrscht Unterdruck. Schließlich ist zur Aufrechterhaltung des Unterdrucks noch ein Getter 14 eingebaut.

## Patentansprüche

1. Isoliergehäuse, bestehend aus einem doppelwandigen, vakuumdichten Gehäuse (1, 3; 11, 12) mit einer den Zwischenraum ausfüllenden gestützten Vakuumisolierung (2; 13), dadurch gekennzeichnet, daß der Stützkörper (2; 13) aus einer rieselfähigen (granulat- oder pulverförmigen) Siliziumoxidverbindung besteht.

2. Isoliergehäuse nach Anspruch 1, dadurch gekennzeichnet, daß die Siliziumoxidverbindung ein Schaumgranulat ist.

3. Isoliergehäuse nach Anspruch 2, dadurch gekennzeichnet, daß ein offenzelliges Schaumglasgranulat mit einem Korndurchmesser von 2 bis 5 mm und einem Schüttgewicht von kleiner 0,2g/cm³ verwendet wird.

4. Isoliergehäuse nach Anspruch 1, dadurch gekennzeichnet, daß die Siliziumoxidverbindung eine pyrogene Kieselsäure ist.

5. Isoliergehäuse nach einem der Ansprüche 1 bis 4, dadurch gekennzeichnet, daß der Innen (3; 11)- und Außenbehälter (1; 12) aus Metall oder Kunststoff oder einer beliebigen Kombination dieser Materialien besteht.

6. Isoliergehäuse nach einem der Ansprüche 1 bis 3, dadurch gekennzeichnet, daß der Innenbehälter (3) auf der Nutzseite mit einem harten, glasartigen Überzug versehen ist.

7. Isoliergehäuse nach einem der Ansprüche 1 bis 6, dadurch gekennzeichnet, daß bei aus Kunststoffe bestehenden Wandelementen (1 und/oder 3; 11, 12) diese insbesondere auf der dem Vakuumraum zugewandten Seite mit einer diffusionsdichten Schicht (1a und 3a; 11a, 12a) versehen sind.

8. Isoliergehäuse nach einem der Ansprüche 1 bis 6, dadurch gekennzeichnet, daß die aus Kunststoff gefertigten Behälterwände auf der dem Vakuumraum zugewandten Seite mit einer diffusionsdichten Folie kaschiert sind.

9. Isoliergehäuse nach einem der Ansprüche 1 bis 8, dadurch gekennzeichnet, daß in dem Stützkörper (2; 13) ein Getter (4; 14) untergebracht ist. .

10. Isoliergehäuse nach einem der Ansprüche 1 bis 9, dadurch gekennzeichnet, daß das Isoliergehäuse für die Kühlgeräte und/oder Energiespeicher dient (Fig. 1)

11. Isoliergehäuse nach einem der Ansprüche 1 bis 9, dadurch gekennzeichnet, daß das Isoliergehäuse als Isoliergefäß für Speisen und/oder Getränke ausgebildet ist.
